# EUROPEAN PATENT SPECIFICATION

(11) **EP 1 615 802 B1**
(45) Date of publication and mention of the grant of the patent: **04.04.2007**
(21) Application number: 04726047.6
(22) Date of filing: 06.04.2004
(51) Int. Cl.: B60R 7/04

(54) **HOLDER FOR CARDS OF THE CREDIT CARD TYPE**
HALTER FÜR KARTEN DER KREDITKARTENART
SUPPORT DE CARTE DU TYPE CARTE DE CREDIT

(30) Priority: 10.04.2003 SE 0301055
(43) Date of publication of application: 18.01.2006
(73) Proprietor: Scania CV AB (publ), 151 87 Södertälje (SE)
(72) Inventor: HOLMSTRAND, Mats, S-151 68 Södertälje (SE)
(86) International application number: PCT/SE2004/000536
(87) International publication number: WO 2004/089694

(56) References cited:
- EP-A2- 1 120 314
- GB-A- 1 485 766
- GB-A- 2 309 670
- JP-A- 8 091 133

## Description

### TECHNICAL FIELD

The invention relates to a holder for cards of the credit card type, adapted to be fitted in a vehicle element such as an instrument panel and comprises a tray-like hollow space with a pair of mutually opposite sidewalls and an open front.

### BACKGROUND

Such a holder is known from GB-2309670-A. In the case of that holder, the cards are retained in an upper compartment of the holder by clamping means in the form of longitudinal flanges which protrude into the compartment from the upper and lower sides of the compartment. A planar holder similar in principle is known from JP-8091133-A.

One object of the present invention is to further develop a holder of the kind indicated in the introduction so that a plurality of cards can be retained separately at a distance from one another so as to be readily identifiable by and accessible to the user.

Another object is to provide a holder which can alternatively be used as a general storage compartment when no cards are stored in the holder.

These and other objects of the invention are achieved by the features indicated in the claims.

### SUMMARY OF THE INVENTION

According to one version of the invention, the holder comprises holding means which protrude into the hollow space from the mutually opposite sidewalls. Each pair of holding means on each sidewall delineate between them a channel for accommodating a respective edge region of a card which is introduced into the holder via the front of the holder. The channel is curved in such a way that the edge region of the card is clamped between the holding means in order to retain the card in the holder.

Appropriate variation of the curvature and width of the channels renders shaping the channels to suit different requirements a simple matter. Large radius of curvature and large width of the channels not only make it possible to keep the various cards apart, making it easy for the user to distinguish them from one another, but also enable each channel to accommodate a plurality of cards if so desired. Small radius of curvature and small width of the channels result in space for many channels, allowing more cards to be kept separate in the holder. The fact that only the edge regions of the cards engage with the holding means enables the latter to be of small dimensions and thereby only insignificantly encroach upon the otherwise clear space in the holder.

Other features and advantages of the invention are indicated by the following detailed description and the claims.

### DESCRIPTION OF THE DRAWINGS

FIG. 1 is a perspective view of a holder according to the invention; and
FIG. 2 is a view from beneath, partly in section and partly cut away, of a holder according to the invention fitted in an instrument panel; and
FIG. 3 is a longitudinal sectional view, partly cut away, of a holder according to the invention.

### DETAILED DESCRIPTION OF AN EMBODIMENT

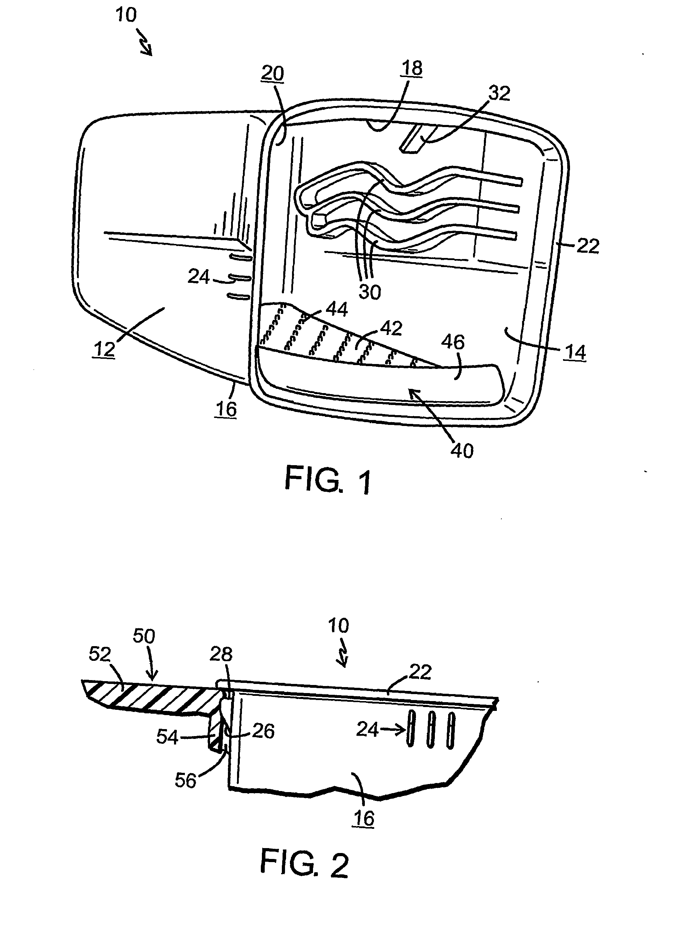

The credit card holder 10 depicted in FIG. 1 takes the form of an approximately parallelepipedic tray made of injection-moulded plastic and open in front and delineates a hollow space bounded by a pair of mutually opposite sidewalls 12, 14, a lower wall 16, a upper wall 18 and a rear wall 20.

As illustrated in FIG. 2, the holder 10 is arranged to be accommodated in a substantially rectangular aperture 56 in an instrument panel 50 of a motor vehicle. The aperture 56 may typically be one of several readymade apertures in any of the standardised modules 52 of the instrument panel 50 which are intended to accommodate various accessories such as radio, trip computer, storage compartment etc. The aperture 56 is bounded by sidewalls 54 which in various known ways may be arranged to engage with and releasably retain the accessory concerned. In the embodiment depicted, each of the four outsides of the holder 10 have arranged on them a set of locking means in the form of flanges 24 protruding from the outside. The end of each flange which faces towards the rear wall of the holder 10 takes the form of a sloping ramp 26 to facilitate insertion into the aperture 56 when the flange comes into releasable locking engagement with the respective sidewall 54 by elastic deformation of the sidewall 54. The opposite ends 28 of the flanges 24 extend perpendicular relative to the sidewall 54 to act like a locking hook rendering the holder 10 difficult to pull out. A peripheral frame 22 at the open front of the holder 10 constitutes, in engagement with the front of the instrument panel 50, a stop which prevents the holder 10 from being pushed too far into the aperture 56.

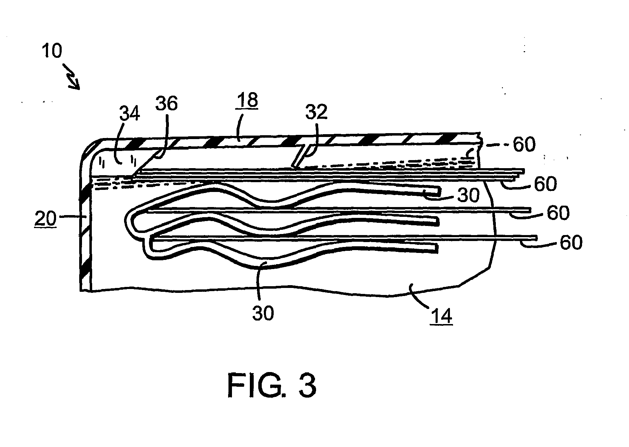

As illustrated in FIGS. 1 and 3, the inside (only one inside is depicted) of each of the two mutually opposite sidewalls 12, 14 has arranged on it holding means for accommodating and retaining cards 60 (FIG. 3) of the credit card type. In the embodiment depicted, each holding means takes the form of a strip or flange 30 which protrudes only a short distance from the respective sidewall 12, 14 and which has in its longitudinal extent approximately the shape of sine curve with a small amplitude and a "length" of approximately 1.5 periods, so that each flange has two wave crests and between them a wave trough. More specifically, an odd number (three in the embodiment depicted) of such flanges are arranged above one another so that each pair of them delineate between them a channel which is preferably closed to the rear in the holder 10 or provided with a bottom. Each such channel is arranged to accommodate a relating side edge region of a card 60 which is inserted into the holder 10 from in front. As illustrated in the version in FIG. 3, each side edge region of the inserted card 60 is clamped by elastic bending at three points, i.e. at two wave crests of a flange 30 and at one wave trough of the nearest adjacent flange 30. The vertical distance between said wave crests and wave troughs is consequently less than the thickness of the card 60, which may typically be 0.8 mm. As further illustrated in FIG. 3, it is advantageous that each lower channel be somewhat shorter than the next channel above, so that a lower card 60 protrudes somewhat further out from the holder 10 than the next card 60 above. This may make it easier for a user to distinguish the cards 60 from one another visually when needing to take a particular card 60 out of the holder 10. The curved channels do in principle make it possible for almost all of the channels of the holder in the embodiment depicted to accommodate and retain more than one card - the number of cards which can be accommodated is in principle determined by the distance between successive flanges 30, but for the sake of accessibility it is preferable to store only one card in each channel.

Although the holding means described above are primarily intended to retain individual cards which need to be quickly accessible, the holder 10 depicted also has further holding means for retainingly storing a number of cards 60 in a stack, e.g. a stack of two to five cards 60. The further holding means comprises a pair of plate springs 32 (only one is depicted in FIGS. 1 and 3) which extend downwards and rearwards from the inside of the upper wall 18, and a protrusion or flange 34 (FIG. 3) which is directed downwards from the rear end of the inside of the upper wall 18. In the lateral direction, the flange 34 is situated approximately at the middle of the holder 10. Referring to FIG. 3, the further holding means cooperates with the uppermost of the previously described flanges 30 in the following manner in order to retain a pack of cards:

When a pack or stack of two cards is to be stored in the holder 10, the stack (depicted in chain-dotted lines) is introduced above the uppermost flange 30. The movement of inserting the stack proceeds initially without being affected by the plate spring 32 until the leading edge of the pack comes into contact with a downwardly and rearwardly sloping edge 36 of the flange 34. As the user continues to push the pack of cards into the holder 10, the leading edge of the pack will be guided downwards by the edge 36 to engagement with the lower edge of the flange 34. The result is that the pack will be elastically clamped at six points, viz. at the lower edge of the flange 34, at the wave crests of the uppermost flanges 30 and at the plate springs 32.

When a further stack of cards 60 is to be stored in the holder 10, it is introduced in the same way as the previous stack (the latter now being depicted in continuous lines) above the uppermost flange 30. As the stack is now thicker, its insertion movement will not proceed unaffected by the plate springs 32, as the latter will clamp the pack of cards to the respective upper flange 30. Hereby there is no need for the stack to be pushed past the sloping edge 36 of the flange 34, as depicted in FIG. 3. The elasticity of the plate springs 32 thus makes it possible for the number of cards 60 in the pack to range typically from three to five cards 60 while maintaining the retaining function and insertability.

The lower wall 16 of the holder 10 has arranged on it a planar insert in the form of a rubber sheet 40. The upper side 42 of the sheet 40 has a friction-increasing layer which may comprise the rubber material itself and which may also exhibit, as depicted, a pattern of protrusions 44. The sheet 40 is intended to retain undepicted small objects, such as coins and the like, lying in the holder 10. To prevent unintended egress of objects from the open front of the holder 10, the sheet 40 has a raised forward edge 46. The sheet 40 may also be releasably anchored to the rear wall 20 of the holder 10 by means of a pair of tenons which are integral with and protrude from the rear edge of the sheet 40 and fit retainingly into undepicted relating holes in the rear wall 20.

## Claims

1. A holder (10) for cards of the credit card type adapted to be fitted in a vehicle element, such as an instrument panel, and comprises a tray-like hollow space with a pair of mutually opposite sidewalls (12, 14) and an open front,
**characterised by**
holding means (30) protruding into the hollow space from the mutually opposite sidewalls (12, 14), each pair of which holding means (30) on each sidewall delineate between them a channel for accommodating a respective edge region of a card (60) inserted into the holder (10) via the front of the holder, which channel curves in such a way that said edge region is clamped between the holding means (30) in order to retain the card (60) in the holder (10).

2. A holder according to claim 1, **characterised in that** the hollow space has a depth which is smaller than the length of the card (10).

3. A holder according to claim 1 or 2, **characterised in that** said holding means (30) protrude only a short distance into the hollow space.

4. A holder according to any one of the foregoing claims, **characterised in that** said holding means comprise flanges (30).

5. A holder according to any one of the foregoing claims, **characterised in that** the channel has approximately sinusoidal curvature.

6. A holder according to any one of the foregoing claims, **characterised in that** each channel has a bottom in its longitudinal direction and that the bottom of each channel is situated further into the hollow space than the bottom of the next channel beneath said channel.

7. A holder according to any one of the foregoing claims, **characterised by** further holding means comprising spring means (32) protruding into the hollow space from an upper wall (18) of the holder in order to retain a pack of cards (60) on the upper side of the uppermost of said holding means (30).

8. A holder according to any one of the foregoing claims, **characterised by** a lower wall (16) which has an upper side comprising a friction-increasing layer (40) for retaining small objects, such as coins and the like, lying loose on said upper side.

9. A holder according to claim 8, **characterised in that** said upper side is formed on a planar insert (40) in the holder.

10. A holder according to claim 9, **characterised in that** the insert comprises a rubber sheet (40) with a raised forward edge (46) forming a barrier to unintended egress of said such objects from the open front of the holder (10).

## Patentansprüche

1. Halter (10) für kreditkartenartige Karten, der ausgeführt ist, um in ein Kraftfahrzeugelement, wie eine Instrumententafel, eingepasst zu werden, und der einen wannenartigen Hohlraum mit einem Paar sich gegenseitig gegenüberliegender Seitenwände (12, 14) und einer offenen Vorderseite umfasst, **gekennzeichnet durch**
Haltemittel (30), die in den Hohlraum von den sich gegenseitig gegenüberliegenden Seitenwänden (12, 14) hineinragen, wobei jedes Paar der Haltemittel (30) an jeder Seitenwand einen Durchgang zur Aufnahme eines jeweiligen Randbereichs einer Karte (60) zwischen diesen begrenzt, die in den Halter (10) über die Vorderseite des Halters eingeführt wird, wobei der Durchgang sich in einer solchen Weise krümmt, dass der Randbereich zwischen den Haltemitteln (30) eingeklemmt ist, um die Karte (60) in dem Halter (10) zu halten.

2. Halter nach Anspruch 1, **dadurch gekennzeichnet, dass** der Hohlraum eine Tiefe besitzt, die geringer ist als die Länge der Karte (10).

3. Halter nach Anspruch 1 oder 2, **dadurch gekennzeichnet, dass** die Haltemittel (30) nur eine geringe Strecke in den Hohlraum hineinragen.

4. Halter nach einem der vorhergehenden Ansprüche, **dadurch gekennzeichnet, dass** die Haltemittel Flansche (30) umfassen.

5. Halter nach einem der vorhergehenden Ansprüche, **dadurch gekennzeichnet, dass** der Durchgang eine annähernd sinusförmige Krümmung besitzt.

6. Halter nach einem der vorhergehenden Ansprüche, **dadurch gekennzeichnet, dass** jeder Durchgang in seiner Längsrichtung ein Ende besitzt, und dass das Ende eines jeden Durchgangs tiefer in dem Hohlraum angebracht ist, als das Ende des nächsten Durchgangs neben dem Durchgang.

7. Halter nach einem der vorhergehenden Ansprüche, **gekennzeichnet durch** weitere Haltemittel, die Federmittel (32) umfassen, welche in den Hohlraum von einer oberen Wand (18) des Halters hineinragen, um ein Paket von Karten (60) auf der Oberseite des höchsten der Haltemittel (30) zu halten.

8. Halter nach einem der vorhergehenden Ansprüche, **gekennzeichnet durch** eine untere Wand (16), die eine Oberseite besitzt, welche eine reibungserhöhende Schicht (40) aufweist zur Aufbewahrung kleiner Teile, wie Münzen und Ähnliches, die lose auf der Oberseite liegen.

9. Halter nach Anspruch 8, **dadurch gekennzeichnet, dass** die Oberseite auf einem ebenen Einsatz (40) in dem Halter ausgebildet ist.

10. Halter nach Anspruch 9, **dadurch gekennzeichnet, dass** der Einsatz eine Gummimatte (40) mit einer erhabenen Vorderkante (46) aufweist, die eine Barriere für ein unbeabsichtigtes Herausfallen solcher Teile aus der offenen Vorderseite des Halters (10) darstellt.

## Revendications

1. Support (10) de carte du type carte de crédit agencé pour être adapté dans un élément de véhicule, comme un panneau d'instrument, et comprenant un espace creux en forme de plateau avec une paire de parois latérales mutuellement opposées (12, 14) et un avant ouvert, **caractérisé par**
des moyens de maintien (30) faisant saillie dans l'espace creux à partir des parois latérales mutuellement opposées (12, 14), dont chaque paire de moyens de maintien (30) sur chaque paroi latérale délimite entre eux un canal pour recevoir une région de bord respective d'une carte (60) insérée dans le support (10) par l'intermédiaire de l'avant du support, lequel canal s'incurvant de telle façon que ladite région de bord est serrée entre les moyens de maintien (30) afin de retenir la carte (60) dans le support (10).

2. Support selon la revendication 1, **caractérisé en ce que** l'espace creux a une profondeur qui est plus petite que la longueur de la carte (10).

3. Support selon la revendication 1 ou 2, **caractérisé en ce que** lesdits moyens de maintien (30) font saillie seulement d'une courte distance dans l'espace creux.

4. Support selon l'une quelconque des revendications précédentes, **caractérisé en ce que** lesdits moyens de maintien comportent des rebords (30).

5. Support selon l'une quelconque des revendications précédentes, **caractérisé en ce que** le canal a approximativement une courbure sinusoïdale.

6. Support selon l'une quelconque des revendications précédentes, **caractérisé en ce que** chaque canal a un fond dans sa direction longitudinale et **en ce que** le fond de chaque canal est situé davantage dans l'espace creux que le fond du canal suivant en dessous dudit canal.

7. Support selon l'une quelconque des revendications précédentes, **caractérisé par** des moyens de maintien supplémentaires comprenant des moyens élastiques (32) faisant saillie dans l'espace creux à partir d'une paroi supérieure (18) du support afin de retenir un paquet de cartes (60) sur le côté supérieur du plus haut desdits moyens de maintien (30).

8. Support selon l'une quelconque des revendications précédentes, **caractérisé par** une paroi inférieure (60) qui a un côté supérieur comprenant une couche augmentant le frottement (40) pour retenir les petits objets, comme les pièces et analogues, s'étendant de façon lâche sur ledit côté supérieur.

9. Support selon la revendication 8, **caractérisé en ce que** ledit côté supérieur est formé sur un insert plan (40) dans le support.

10. Support selon la revendication 9, **caractérisé en ce que** l'insert comprend une feuille de caoutchouc (40) avec un bord avant relevé (46) formant une barrière à la sortie non désirée de ces objets à partir de l'avant ouvert du support (10).
